(19) **Europäisches Patentamt / European Patent Office / Office européen des brevets**

(11) **EP 4 559 549 A1**

(12) # EUROPEAN PATENT APPLICATION

(43) Date of publication:
**28.05.2025   Bulletin 2025/22**

(21) Application number: **23386122.8**

(22) Date of filing: **27.11.2023**

(51) International Patent Classification (IPC):
**A63F 13/352** $^{(2014.01)}$   **A63F 13/358** $^{(2014.01)}$
**A63F 13/67** $^{(2014.01)}$

(52) Cooperative Patent Classification (CPC):
**A63F 13/67; A63F 13/352; A63F 13/358;**
A63F 13/355

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(71) Applicant: **Sony Interactive Entertainment Inc.**
**Tokyo 108-0075 (JP)**

(72) Inventors:
• **Scott, Harvey**
  **London, W1F 7LP (GB)**

• **Breugelmans, Mark Jacobus**
  **London, W1F 7LP (GB)**
• **Leung, Jun**
  **London, W1F 7LP (GB)**
• **Eder, Michael**
  **London, W1F 7LP (GB)**
• **Michailidis, Lazaros**
  **London, W1F 7LP (GB)**

(74) Representative: **D Young & Co LLP**
  **3 Noble Street**
  **London EC2V 7BQ (GB)**

(54) ## DATA PROCESSING APPARATUS AND METHOD

(57)   A data processing apparatus comprising circuitry configured to: obtain video game data from a video game application indicating an in-game situation; obtain data indicating a predicted in-game action of a user in response to the in-game situation; begin output of a first sequence of video frames depicting the predicted in-game action; receive data indicating an instructed in-game action of the user; if the predicted in-game action is the same as the instructed in-game action, continue output of the first sequence of video frames; and if the predicted in-game action is not the same as the instructed in-game action: stop output of the first sequence of video frames; output one or more interpolated video frames; and begin output of a second sequence of video frames depicting the instructed in-game action.

```
901 ─ Start
        │
902 ─ Obtain video game data
        │
903 ─ Obtain prediction
        │
904 ─ Output first sequence
        │
905 ─ Receive instruction
        │
        ▼
907 ─ Continue first sequence ◄── Yes ── Instruction as predicted? ── No ──► 908 ─ Stop first sequence
        │                                   906                                        │
        │                                                                     909 ─ Interpolate
        │                                                                              │
        │                                                                     910 ─ Output second sequence
        │                                                                              │
        └──────────────────► 911 ─ End ◄──────────────────────────────────────────────┘
```

Fig. 9

**EP 4 559 549 A1**

**Description**

BACKGROUND

Field of the Disclosure

This disclosure relates to a data processing apparatus and method.

Description of the Related Art

The "background" description provided is for the purpose of generally presenting the context of the disclosure. Work of the presently named inventors, to the extent it is described in the background section, as well as aspects of the description which may not otherwise qualify as prior art at the time of filing, are neither expressly or impliedly admitted as prior art against the present disclosure.

Video games are sometimes subjected to undesirable "lag", which is a time delay between a user providing an input (e.g. on a video game controller) and that input being executed in the video game. The lag may be due to network latency (e.g. in an online multiplayer game) or due to latency between a video game controller and a video games console.

Lag can negatively affect a user's performance in the game through no fault of the user. For example, in a video game requiring quick reaction times (such as a first-person shooter, FPS, game), lag may cause a user's instructed actions to be delayed and cause negative consequences for the user (e.g. a successful attack by an enemy player) which would not have occurred if there had been no (or less) lag. Alleviating the consequences of lag is therefore highly desirable.

One way in which the consequences of lag may be alleviated is by predicting, based on a current situation in the video game (e.g. the player's environment and the number and position of enemy players), the next action of the player. If the prediction is correct, the result is as if no (or less) lag occurred. Thus, for example, if the player is predicted to perform an action causing a character controlled by the player to run for cover, this action is started before an input from the player has been received. Once the input from the player has been received and the input corresponds to the predicted action, the effect is that the player experiences their character carrying out the action concerned with no (or negligible) perceivable lag, even if, in reality, there was a lag between the player providing the input and the input being received. This reduces the negative effects of lag and improves the player's gaming experience.

A problem, however, is if the predicted action does not actually correspond with the action instructed via the user input. For instance, if the predicted action is for the player's character to run for cover but, in fact, the player instructs the character to attack, then there is a discrepancy between the predicted action and instructed action which will not become apparent until the player's input instructing the action has been received. If there is a significant lag between the user providing the input and the input being received (e.g. due to network and/or controller communication latency), this will result in the player's character beginning to perform an action not instructed by the user. The predicted action thus needs to be corrected to correspond with the instructed action. There is a desire to achieve this correction while maintaining a natural and engaging gameplay experience for the user.

SUMMARY

The present disclosure is defined by the claims.

BRIEF DESCRIPTION OF THE DRAWINGS

Non-limiting embodiments and advantages of the present disclosure are explained with reference to the following detailed description taken in conjunction with the accompanying drawings, wherein:

Fig. 1 schematically shows an example entertainment system;

Figs. 2A and 2B schematically show example components associated with the entertainment system;

Fig. 3 schematically shows an example gaming controller;

Fig. 4A schematically shows an initial in-game situation;

Fig. 4B schematically shows a predicted in-game action;

Fig. 4C schematically shows an instructed in-game action;

Fig. 5A schematically shows a sequence of video frames depicting the predicted in-game action;

Fig. 5B schematically shows a sequence of video frames depicting the instructed in-game action;

Fig. 6A schematically shows a correction without interpolation;

Fig. 6B schematically shows a correction with interpolation;

Fig. 7 shows an example of machine learning training data;

Fig. 8 schematically shows an example system; and

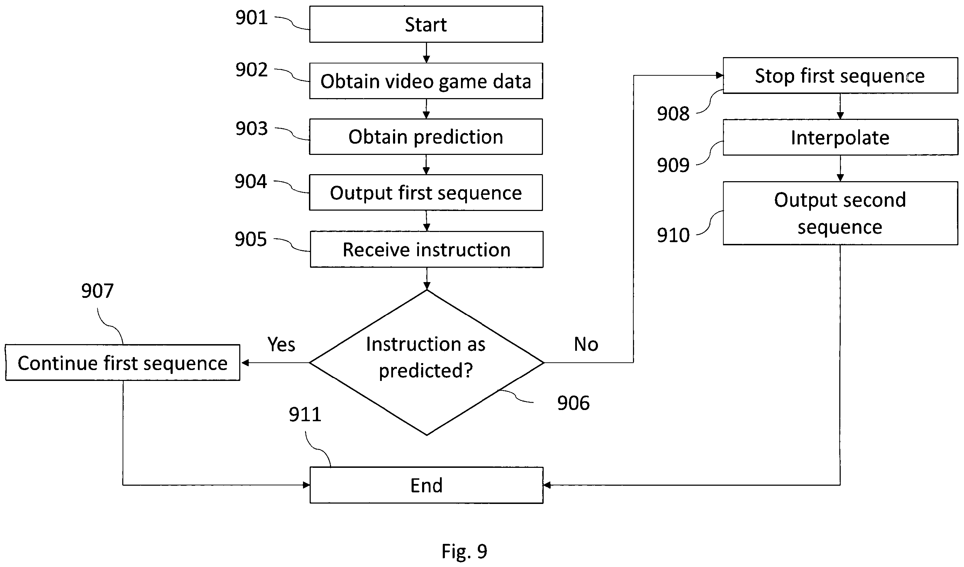

Fig. 9 shows an example method.

Like reference numerals designate identical or corresponding parts throughout the drawings.

DETAILED DESCRIPTION OF THE EMBODIMENTS

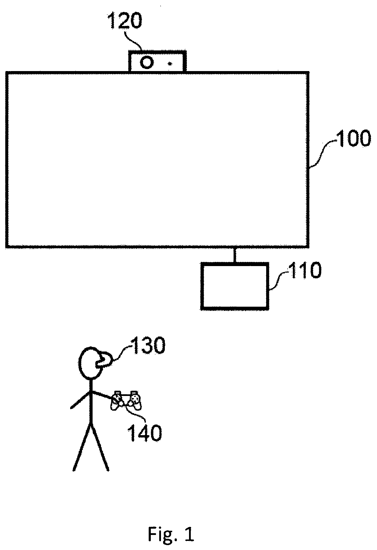

Fig. 1 schematically illustrates an entertainment system suitable for implementing one or more of the embodiments of the present disclosure. Any suitable combination of devices and peripherals may be used to implement embodiments of the present disclosure, rather than being limited only to the configuration shown.

A display device 100 (e.g. a television or monitor), associated with a games console 110, is used to display content to one or more users. A user is someone who interacts with the displayed content, such as a player of a game, or, at least, someone who views the displayed content. A user who views the displayed content without interacting with it may be referred to as a viewer. This content may be a video game, for example, or any other content such as a movie or any other video content. The games console 110 is an example of a content providing device or entertainment device; alternative, or additional, devices may include computers, mobile phones, set-top boxes, and physical media playback devices, for example. In some embodiments the content may be obtained by the display device itself - for instance, via a network connection or a local hard drive.

One or more video and/or audio capture devices (such as the integrated camera and microphone 120) may be provided to capture images and/or audio in the environment of the display device. While shown as a separate unit in Fig. 1, it is considered that such devices may be integrated within one or more other units (such as the display device 100 or the games console 110 in Fig. 1).

In some implementations, an additional or alternative display device such as a head-mountable display (HMD) 130 may be provided. Such a display can be worn on the head of a user, and is operable to provide augmented reality or virtual reality content to a user via a near-eye display screen. A user may be further provided with a video game controller 140 which enables the user to interact with the games console 110. This may be through the provision of buttons, motion sensors, cameras, microphones, and/or any other suitable method of detecting an input from or action by a user.

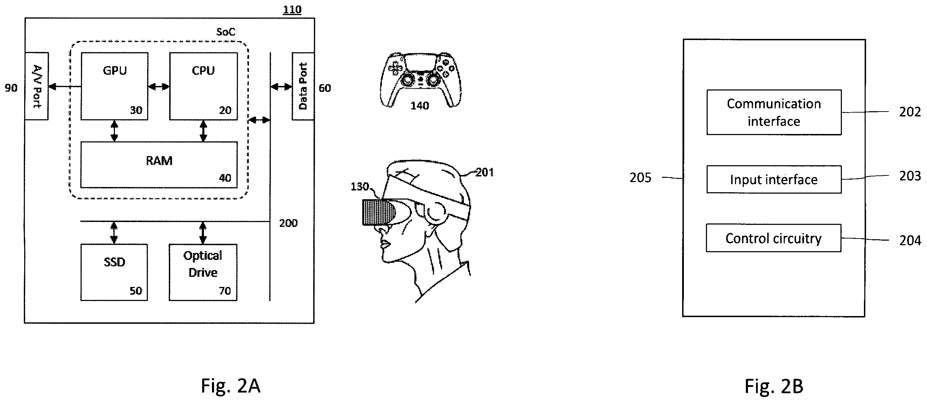

Fig. 2A shows an example of the games console 110. The games console 110 is an example of a data processing apparatus.

The games console 110 comprises a central processing unit or CPU 20. This may be a single or multi core processor, for example comprising eight cores. The games console also comprises a graphical processing unit or GPU 30. The GPU can be physically separate to the CPU, or integrated with the CPU as a system on a chip (SoC).

The games console also comprises random access memory, RAM 40, and may either have separate RAM for each of the CPU and GPU, or shared RAM. The or each RAM can be physically separate, or integrated as part of an SoC. Further storage is provided by a disk 50, either as an external or internal hard drive, or as an external solid state drive (SSD), or an internal SSD.

The games console may transmit or receive data via one or more data ports 60, such as a universal serial bus (USB) port, Ethernet ® port, WiFi ® port, Bluetooth ® port or similar, as appropriate. It may also optionally receive data via an optical drive 70.

Interaction with the games console is typically provided using one or more instances of the controller 140. In an example, communication between each controller 140 and the games console 110 occurs via the data port(s) 60.

Audio/visual (A/V) outputs from the games console are typically provided through one or more A/V ports 90, or through one or more of the wired or wireless data ports 60. The A/V port(s) 90 may also receive audio/visual signals output by the integrated camera and microphone 120, for example. The microphone is optional and/or may be separate to the camera. Thus, the integrated camera and microphone 120 may instead be a camera only. The camera may capture still and/or video images.

Where components are not integrated, they may be connected as appropriate either by a dedicated data link or via a bus 200.

As explained, examples of a device for displaying images output by the game console 110 are the display device 100 and the HMD 130. The HMD is worn by a user 201. In an example, communication between the display device 100 and the games console 110 occurs via the A/V port(s) 90 and communication between the HMD 130 and the games console 110 occurs via the data port(s) 60.

The controller 140 is an example of a peripheral device for allowing the games console 110 to receive input from and/or provide output to the user. Examples of other peripheral devices include wearable devices (such as smartwatches, fitness trackers and the like), microphones (for receiving speech input from the user) and headphones (for outputting audible sounds to the user).

Fig. 2B shows some example components of a peripheral device 205 for receiving input from a user. The peripheral device comprises a communication interface 202 for transmitting wireless signals to and/or receiving wireless signals from the games console 110 (e.g. via data port(s) 60) and an input interface 203 for receiving input from the user. The communication interface 202 and input interface 203 are controlled by control circuitry 204.

In an example, if the peripheral device 205 is a controller (like controller 140), the input interface 203 comprises buttons, joysticks and/or triggers or the like operable by the user. In another example, if the peripheral device 205 is a microphone, the input interface 203 comprises a transducer for detecting speech uttered by a user as an input. In another example, if the peripheral device 205 is a fitness tracker, the input interface 203 comprises a photoplethysmogram (PPG) sensor for detecting a heart rate of the user as an input. The input interface 203 may take any other suitable form depending on the type of input the peripheral device is configured to detect.

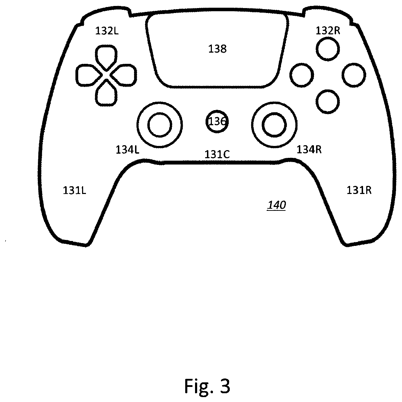

Figure 3 illustrates an example of a controller 140. Such a controller typically has two handle sections 131L, 131R and a central body 131C. Various controls are distributed over the controller, typically in local groups. Examples include a left button group 132L, which may comprise directional controls and/or one or more shoulder buttons, and similarly right button group 132R, which may comprise function controls and/or one or more shoulder buttons. The controller also includes left and/or right joysticks 134L, 134R, which may optionally also be operable as buttons by pressing down on them.

The controller (typically in a central portion of the controller) may also comprise one or more system buttons 136, which typically cause interaction with an operating system of the entertainment device rather than with a game or other application currently running on it. Such buttons may summon a system menu or allow for recording or sharing of displayed content, for example. Furthermore, the controller may comprise one or more other elements such as a touchpad 138, a light for optical tracking (not shown), a screen (not shown), haptic feedback elements (not shown), and the like.

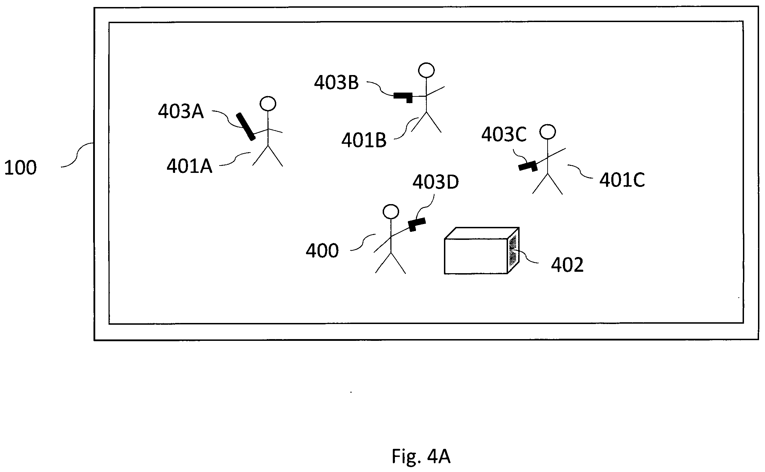

Figs. 4A to 4C show an example in which a predicted action by a user and instructed action by a user differ. Here, example output video frames of the video game displayed on the displayed device 100 are shown.

Fig. 4A shows an initial in-game situation. The user controls character 400 who carries weapon 403D. In this example, weapon 403D is a hand gun. There are three enemy characters 401A, 401B and 401C. These are controlled, for example, by artificial intelligence, AI, or, in an online multiplayer game, by other players over a network. The enemy characters 401A to 401C are controlled to attach the user-controlled character 400 using weapons 403A to 403C. In this example, the weapon 403A is a baseball bat and the weapons 403B and 403C are hand guns. The gaming environment also comprises an object 402 (in this example, a large wooden crate) which the character 400 may take cover behind (e.g. to prevent character 400 from being hit by bullets fired from the hand guns 403B and 403C when the characters 403B and 403C are in the positions as shown).

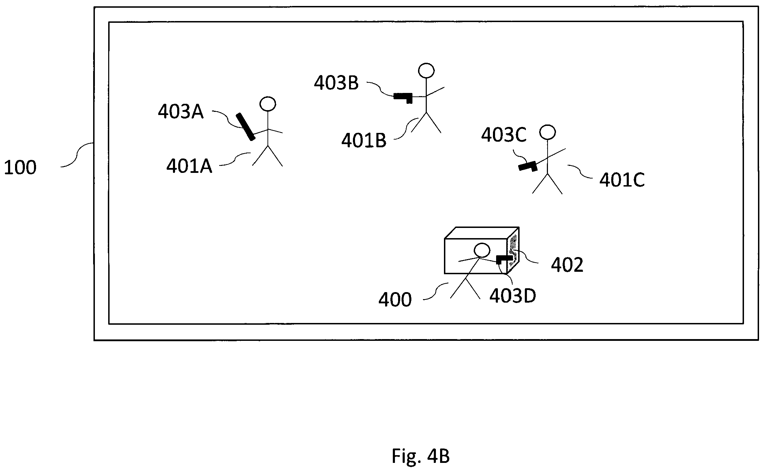

Fig. 4B shows a predicted action by the user controlling character 400. The predicted action is for the user to control the character 400 to take cover behind object 402.

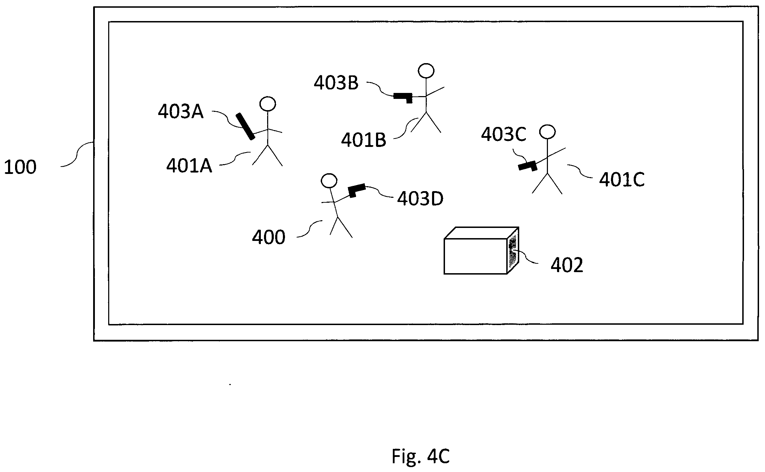

Fig. 4C, on the other hand, shows the actual action instructed by the user once an input (e.g. from controller 140) instructing that action has been successfully processed. The actual action is not for the character 400 to take cover behind the object 402 (as predicted) but, instead, to approach the enemy characters 403A to 403C and attack them with the hand gun 403D.

There is therefore a discrepancy between the predicted action of Fig. 4B and the instructed action of Fig. 4C. This discrepancy is not known, however, until the input instructing the attack of Fig. 4C has been received. If there is a lag, however, then the predicted action of Fig. 4B will already have been started and the character 400 moved according to this action (towards the object 402, in this example). When the actual instructed action becomes known (because the input instructing the action has subsequently been received), the character 400 is thus in the wrong position. For example, once the input instructing the action has been received, it is determined that the character 400 should be at the position shown in Fig. 4C when, in fact, due to (incorrect) prediction, they are already shown to be at the position shown in Fig. 4B. There is therefore a need for this discrepancy to be corrected in a way which does not negatively affect the gaming experience of the user.

It is noted that in multiplayer online game, each player is typically located in a different geographical location with their own games console 110. The games consoles 110 are connected to each other over a network. A signal indicating an input provided by one user to control a character in the game must thus be transmitted from that user's games console to each of the other games consoles in order for that every player to see that character perform the same action. Depending on network conditions, the geographical distances between players, etc. the lag experienced for different players may therefore be different. The games console 110 of each player may therefore be configured to predict the next action of a given user and, once the signal indicating the actual instructed action is received, determine whether or not there is a discrepancy. Each individual games console may then correct the discrepancy in the way described below.

As will be explained, this allows the discrepancy to be corrected in a smooth manner for each games console, even if a different amount of lag is experienced for different games consoles. The example(s) below may be carried out by each games console which is able to make a prediction of a particular action in the game and determine whether or not that prediction was correct once a signal indicating the action which was actually instructed is received (for example, directly from the controller 140 or over a network from another games console of another user).

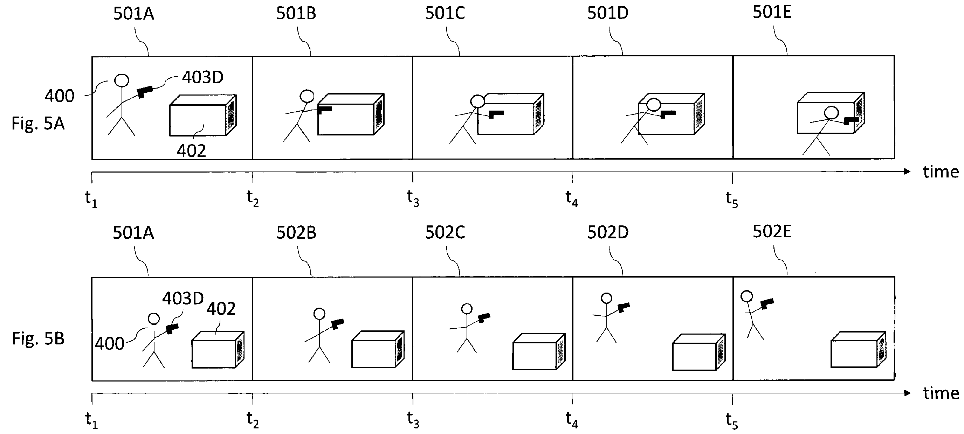

Figs. 5A and 5B show successive video frames for the actions of character 400 in the video game illustrated in Figs. 4B and 4C, respectively.

In particular, Fig. 5A shows successive video frames 501A to 501E showing the movement of character 400 from their initial position in Fig. 4A (as shown at the video frame 501A displayed at time $t_1$) to their position

in Fig. 4B (taking cover behind object 402, as shown in the video frame 501E displayed at time $t_5$) according to the predicted action of character 400.

On the other hand, Fig. 5B shows successive video frames 502A to 502E showing the movement of character 400 from their initial position in Fig. 4A (as shown at the video frame 502A displayed at time $t_1$, the video frame 502A being the same as video frame 501A in this example) to their position in Fig. 4C (conducting an attack against enemy characters 403A to 403C, as shown in the video frame 502E displayed at time $t_5$) according to the action of character 400 as actually instructed by the user.

As discussed, however, a problem occurs if the lag between a user inputting a command (e.g. via controller 140) and a signal indicative of that command being received by the games console 110 is sufficiently large that the signal is only received after the games console 100 has already started to output one or more frames showing the incorrect predicted action.

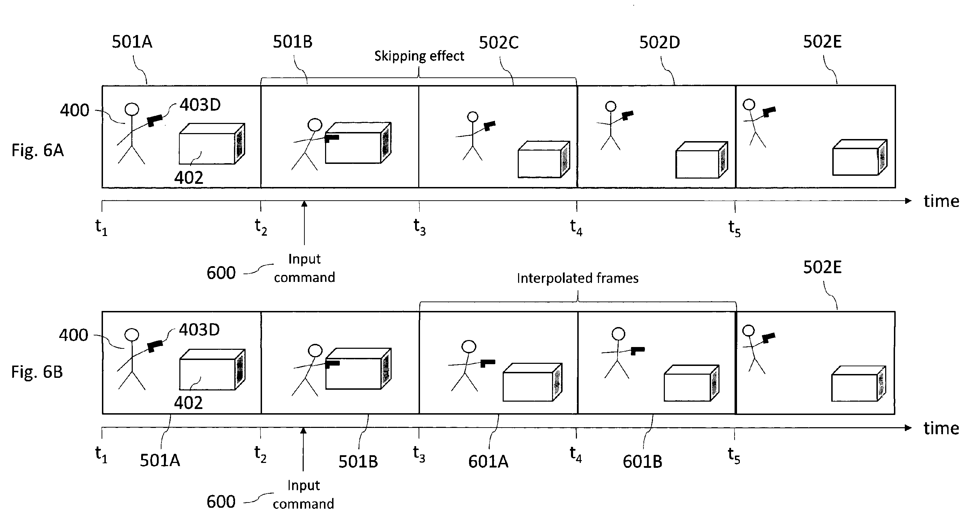

This is illustrated in Fig. 6A. Here, because the predicted action is the character 400 taking cover behind the object 402, the games console 110 begins outputting the successive frames 501A to 501E of Fig. 5A to the display device 100 prior to receiving an input command 600 indicating the actual instructed action from the user. In this example, the input command 600 is not received until after time $t_2$, when frame 501B is already being output.

If the action instructed via the input command 600 is the same as the predicted action, then there is no problem. In fact, because output of the successive frames representing the instructed action has already begun, the effect is to alleviate the perception of any lag between the user providing the input command and it being received by the games console.

On the other hand, if the action instructed via the input command 600 is different to the predicted action (e.g. because, rather than the instructed action being for the character 400 to take cover behind the object 402 as predicted, the instructed action is for the character 400 to attack enemy players 403A to 403C, as shown in Fig. 4C and by successive frames 502A to 502E of Fig. 5B), a problem occurs in that there is now a discrepancy between the predicted action and the instructed action. In particular, by the time the instructed action is known (this being at the point at which the input command 600 is received), output of the successive frames representing the incorrect predicted action has already started. The action therefore needs to be corrected.

As shown in Fig. 6A, the action may be corrected simply by inserting the next frame 502C of the instructed action at the next frame display time $t_3$ instead of the next frame 501C of the predicted action. The subsequent frames 502D and 502E of the instructed action are then displayed at frame display times $t_4$ and $t_5$, respectively. However, this results in a jumping or skipping effect between the frame 501B at $t_2$ and the

frame 502C at time $t_3$ (since the frames 501B and 502C belong to groups of successive frames showing different actions of the character 400). In particular, the character 400 will appear to instantaneously jump or skip from a first position in frame 501B to a second position in frame 502C. This is unnatural and therefore undesirably affects the user's immersion in and enjoyment of the video game.

The present technique addresses this problem as exemplified in Fig. 6B. Here, once the input command 600 has been received and it is determined that the predicted action of the character 400 is incorrect, instead of the next occurring frame 502C of the set of frames showing the correct action being immediately placed after the current frame 501B of the set of frames showing the incorrect action, a later frame 502E of the set of frames showing the correct action is added at its corresponding frame display time (time $t_5$, in this example). New, interpolated, frames 601A and 601B are then added between the current frame 501B of the set of frames showing the incorrect action and this later frame 502E of the set of frames showing the correct action. This means that, once the timing of the later frame 502E is reached, the action has been corrected. At the same time, due to the introduction of the interpolated frames 601A and 601B, the undesirable jump or skip of the character 400 between successive frames is alleviated. In other words, the use of the interpolated frames enables a smoother transition from the incorrect predicted action to the instructed action which appears more natural.

The present technique thus enables a user to benefit from the perception of reduced lag when actions are predicted correctly. At the same time, if an action is predicted incorrectly, then the predicted action is corrected in a smooth and natural manner, thereby maintaining the user's immersion in and enjoyment of the game. User experience is therefore improved.

The interpolated frames 601A and 601B are generated, for example, by interpolating between the current frame 501B (first source frame) of the set of frames showing the incorrect action and the later frame 502E (second source frame) of the set of frames showing the correct action. Any suitable known interpolation technique, such as any suitable known motion interpolation technique, may be used.

In one example, a pose representation of the character 400 is generated for each of the first and second source frames. A pose representation represents the character's body, including arms, legs, torso, neck and head, by lines and joints (connecting the lines) defined in 3D space. In each of the interpolated frames, each joint is positioned between its position in the first source frame and its position in the second source frame.

The position of each joint in each interpolated frame depends on the number of interpolated frames.

For example, if there is to be only one interpolated frame between the first and second source frames, then each joint in the interpolated frame may be positioned halfway between its position in the first source frame and its position in the second source frame.

On the other hand, if there is to be two interpolated frames (as exemplified in Fig. 6B, with interpolated frames 601A and 601B), then each joint in the first-displayed interpolated frame (e.g. frame 601A) may be positioned 1/3 of the distance between its position in the first source frame and its position in the second source frame. Each joint in the second-displayed interpolated frame (e.g. frame 601B) may then be positioned 2/3 of the distance between its position in the first source frame and its position in the second source frame.

This may be generalised such that, for a given joint and a given number N of interpolated frames, the position of that joint in the $n^{th}$ frame is a fraction

$$\frac{n}{N+1}$$

of the distance between the position of that joint in the first source frame and the position of that joint in the second source frame.

For the avoidance of doubt, the first source frame is the frame of the set of frames showing the incorrect predicted action displayed when the input command is received by the games console 110 (e.g. frame 501B displayed at frame display time $t_2$ in Fig. 6B). The second source frame is the frame of the set of frames showing the actual instructed action displayed at two or more frame display times later than the first source frame (e.g. frame 502E displayed at frame display time $t_5$ in Fig. 6B). The interpolated frames are then displayed at the frame display times between the frame display times of the first and second source frames (so, for example, in Fig. 6B, first-displayed interpolated frame 601A is displayed at frame display time $t_3$ and second-displayed interpolated frame 601B is displayed at frame display time $t_4$).

It will be appreciated that Figs. 5A to 5B and 6A to 6B show a simple example for ease of explanation and that, in reality, a larger number of interpolated frames than two may be required to ensure a smooth transition from the display of successive frames showing an incorrect predicted action and to the display of successive frames showing the correct instructed action. For example, depending on the frame rate of the game, the speed with which the character 400 moves, etc. a larger number of interpolated frames (e.g. 2, 4, 8 or 12) may be required.

It is also noted that, to make the movement of the character 400 between frames visually clearer, the frames shown in Figs. 5A to 5B and 6A to 6B actually only show a portion of the full frames displayed on the display device 100 (such full frames being shown in Figs. 4A to 4C and including additional content such as enemy characters 403A to 403C). In reality, it is the full frames which are displayed (for both original and interpolated frames). If motion interpolation is used (as exemplified above), the motion interpolation may be applied to multiple objects if those objects move between frames. For example, motion interpolation may be applied to enemy characters 403A to 403C as well as to character 400, thereby increasing the realism of the interpolated images and the smoothness of the transition when a prediction correction is required.

An action (such as the predicted action shown in Fig. 4B) may be predicted using, for example, a suitable machine learning technique, in particular supervised machine learning using a machine learning model (executed by the CPU 20, GPU 30 and/or one or more processors of a server connected to the games console 110 over a network such as the internet) trained using labelled training data.

The input data (during training and/or inference) may comprise various types of data, such as numerical values, images, video, text, or audio. Raw input data may be pre-processed to obtain an appropriate feature vector used as input to the model. For example, features of an image or audio input may be extracted to obtain a corresponding feature vector. It will be appreciated that the type of input data and techniques for pre-processing the data (if required) may be selected based on the specific task the supervised learning model is used for.

Once prepared, the labelled training data set is used to train the supervised learning model. During training, the model adjusts its internal parameters (e.g. weights) so as to optimize (e.g. minimize) an error function, aiming to minimize the discrepancy between the model's predicted outputs and the labels provided as part of the training data. In some cases, the error function may include a regularization penalty to reduce overfitting of the model to the training data set.

The supervised learning model may use one or more machine learning algorithms in order to learn the mapping between its inputs and outputs. Example suitable learning algorithms include linear regression, logistic regression, artificial neural networks, decision trees, support vector machines (SVM), random forests, and the K-nearest neighbour algorithm.

Once trained, the supervised learning model may be used for inference - i.e. for predicting outputs for previously unseen input data. The supervised learning model may perform classification and/or regression tasks. In a classification task, the supervised learning model predicts discrete class labels for input data, and/or assigns the input data into predetermined categories. In a regression task, the supervised learning model predicts labels that are continuous values.

In some cases, limited amounts of labelled data may be available for training of the model (e.g. because labelling of the data is expensive or impractical). In such cases, the supervised learning model may be extended to further use unlabelled data and/or to generate labelled data.

Considering using unlabelled data, the training data may comprise both labelled and unlabelled training data, and semi-supervised learning may be used to learn a mapping between the model's inputs and outputs. For example, a graph-based method such as Laplacian regularization may be used to extend a SVM algorithm to Laplacian SVM in order to perform semi-supervised learning on the partially labelled training data.

Considering generating labelled data, an active learning model may be used in which the model actively queries an information source (such as a user or operator) to label data points with the desired outputs. Labels are typically requested for only a subset of the training data set, thus reducing the amount of labelling required as compared to fully supervised learning. The model may choose the examples for which labels are requested. For example, the model may request labels for data points that would most change the current model or that would most reduce the model's generalization error. Semi-supervised learning algorithms may then be used to train the model based on the partially labelled data set.

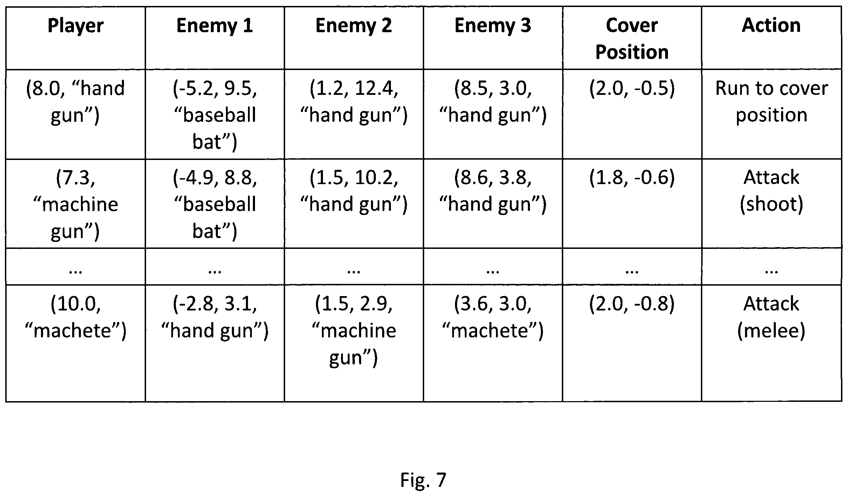

Fig. 7 shows a simplified example of training data that may be used with the present technique. The training data corresponds to the video game example discussed with reference to Figs. 4A to 4C.

Here, the inputs (independent variables) are vectors associated with each of the character 400, enemy characters 403A to 403C and the object 402 the character 400 may use for cover.

Each vector associated with the character 400 includes a first element indicating an amount of health of the character 400 (ranging from full health at 10.0 to death at 0.0) and a second element indicating one of a plurality of predetermined weapons (e.g. "hand gun", "machine gun", "baseball bat" or "machete") held by the character 400.

Each vector associated with each of the enemy characters 403A to 403C (denoted "Enemy 1", "Enemy 2" and "Enemy 3", respectively in Fig. 7) includes a first element indicating a distance of the enemy character from the character 400 in an x direction, a second element indicating a distance of the enemy character from the character 400 in a y direction and a third element indicating one the plurality of predetermined weapons.

Each vector associated with the object 402 includes a first element indicating a distance of the object 402 from the character 400 in the x direction and a second element indicating a distance of the object 402 from the character 400 in the y direction.

In this example, the x direction corresponds to the direction in which the character 400 moves from side-to-side and the y direction corresponds to the direction in which the character 400 moves backwards and forwards. The distances in this example are given in virtual metres, for example, which may be determine based on the scale of the video game so that an object in the video game has a size in virtual metres corresponding to the size in metres such an object would have in the real world. However, any other suitable unit (e.g. a normalised unit extending between -1 and 1 in each of the x and y dimensions) could be used. The positions of an object (including both character and non-character objects) is, for example, the centre of mass position of that object.

The labelled outputs (dependent variables) are the action that was instructed for the character 400 by the user at the point at which the values of the independent variables were recorded. The action is one of a plurality of predetermined actions. They include "Run to cover position" (corresponding to the character 400 moving to a position where they are protected from enemy fire, e.g. behind the object 400 as exemplified in Fig. 4B), "Attack (shoot)" (corresponding to the character 400 attacking the enemy characters 403A to 403C by shooting a firearm-type weapon such as "hand gun" or "machine gun") and "Attack (melee)" (corresponding to the character 400 attacking the enemy characters 403A to 403C using a non-firearm-type weapon such as a "baseball bat" or "machete").

In an example, the training data is collected from real game data collected from players of the particular video game concerned. For example, users may give permission for their gameplay data to be used in training the model. Each time that user takes a particular action, the data of the independent variable vectors is recorded and associated with the label (e.g. "Run to cover position", "Attack (shoot)" or "Attack (melee)") indicating the action. The training data set is thus gradually built up.

Once a sufficient amount of training data has been obtained (e.g. a predetermined number such as 10000, 25000, 50000 or 100000 of sets of input and output data, each set corresponding to one row of a table like that shown in Fig. 7), the training data is used to train a suitable classification machine learning model (like one of those mentioned above). In an example, the training data is obtained from a predetermined number of different users, such as 100, 200, 300, 500 or 1000 different users, with each user providing at least a predetermined number of sets of input and output data (e.g. at least 100 sets per user).

Once trained, the model is able to use new input data (that is, previously unseen independent variable vectors) to predict the action a user will take for that new input data. Specifically, based on the new input data, the model will output a classification indicating one of the plurality of predetermined actions (e.g. "Run to cover position", "Attack (shoot)" or "Attack (melee)").

As previously described, frames showing the predicted action are then output by the games console 110 before an input command instructing an action is received from the user. If the predicted action matches the instructed action, this has the effect of alleviating any lag perceived by the user. On the other hand, if the perceived action does not match the instructed action, the predicted action is corrected using interpolation so the frames output by the games console 110 smoothly transition from those of the predicted action to those of the instructed action.

It will be appreciated the input and output data of Fig. 7 is only a simplified example and, in reality, a larger amount of additional input and/or output data may be used to train the model. For example, as well as the position of each enemy character 403A to 403C and object 402 relative to the user-controlled character 400, the number of enemy characters, the amount of health of each enemy character, the ability or skill level(s) of each enemy character and/or the user-controlled character 400, in-game environmental factors (e.g. the weather, if the landscape is flat or hilly, a city environment or rural environment, etc.) and so on may be used as input data.

It will also be appreciated that the input data will likely vary depending on the genre of game being played. For example, in a soccer game (rather than a first person shooter), the position of the soccer ball in the game will be part of the input data (but the weapons held by each player and position of objects such as object 402 which players may take cover behind will not be part of the input data). The present technique is therefore not limited regarding exactly what input data is used, since this depends on the video game being played.

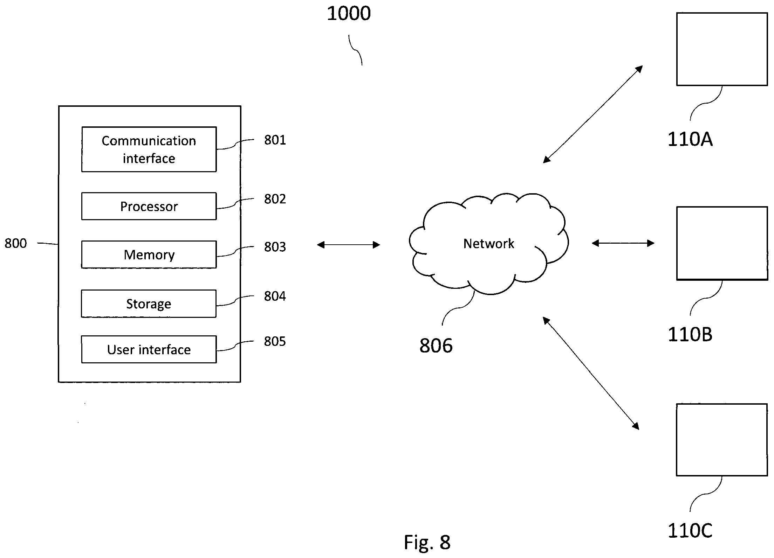

In an example, the machine learning model for predicting the intended action of the user is executed by an external server 800 which connects to a plurality of games consoles 110A to 110C over a network 806 (e.g. the internet). This forms a system 1000 exemplified in Fig. 8.

This allows the machine learning model to be trained based on the gameplay of multiple real players (with player permission). Data for training the machine learning model can therefore be obtained quickly and easily as users play the video game concerned. Furthermore, once trained, input data can be provided to the machine learning model from each games console 110A to 110C to predict the next action of a given character (e.g. character 400). In response, the machine learning model then provides data indicative of the predicted action to each games console. Each games console then outputs frames according to the predicted action until a signal indicating the instructed action is received (at which point, the output of frames is either continued if the predicted action matches the instructed action or the output of frames is corrected in the way previously described). The present technique thus uses readily available gameplay data to train the machine learning model and make the trained machine learning model available to all users.

When the machine learning model is executed by the separate server 800 rather than on each of the games consoles 110A to 110C (meaning input data must be provided from each games console over the network 806 and data indicating the predicted action must be received over the network), the network architecture may be designed such that this is still associated with less lag overall than each games console waiting for a signal indicating the input command from the relevant user (e.g. the user controlling character 400 in an online multiplayer game - in this case, each of the other users may be controlling a respective one of the enemy characters 403A to 403C, for example).

For example, if all input commands are routed between the games consoles 110A to 110C over the network 806 via the server 800 (or via a separate router (not shown) co-located with the server 800) then, for a games console (e.g. games console 110A) located closer to the server 800 than another games console (e.g. games console 110B), the closer games console 110A may receive the data indicating the predicted action from the server 800 before it receives the input command indicating the actual instructed action from the further games console 110B. The games console 110A is thus able to begin output of frames according to the predicted action before the input command from the games console 110B is received.

In an example, each games console may transmit input data to the server 300 periodically (e.g. every 1, 2, 5 or 10 frames). If the resulting signal indicating the predicted action is received before the relevant input command, the output of frames showing the predicted action is carried out (and continued or corrected depending on the instructed action indicated by the input command when the input command is received). On the other hand, if the relevant input command is received before the predicted action, then the output of frames showing the action instructed by the input command is carried out and the signal indicating the predicted action (once it is subsequently received) is discarded. Action prediction is therefore used only when it provides reduced lag, thereby allowing lag to be alleviated for each games console in the most appropriate way.

The server 800 of Fig. 10 is another data processing apparatus comprising a communication interface 801 for sending electronic information to and/or receiving electronic information from one or more other apparatuses (e.g. games consoles 110A to 110C), a processor 802 for executing electronic instructions, a memory 803 for storing the electronic instructions to be executed and electronic input and output information associated with the electronic instructions, a storage medium 804 (e.g. a hard disk drive or solid state drive) for long term storage of information and a user interface 805 (e.g. a touch screen, a non-touch screen, buttons, a keyboard and/or a mouse) for receiving commands from and/or outputting information to a user (e.g. a game developer and/or network provider). Each of the communication interface 801, processor 802, memory 803, storage medium 804 and user interface 805 are implemented using appropriate circuitry, for example. The processor 802 controls the operation of each of the communication interface 801, memory 803, storage medium 804 and user interface 805.

There may be multiple servers 800 distributed around the world, each executing the trained machine learning model. Each games console 110A to 110C then obtains predicted actions from the nearest server 800. This helps further reduce the time required for receiving data indicating the predicted action.

In an example, game developers may access the machine learning model via an application programming interface (API) made available by the server 800. This may allow both training of the machine learning model (e.g. by providing input gameplay data and corresponding actions as labelled output data) and use of the trained machine learning model through specific API calls executed by the video game application concerned on each of the games consoles 110A to 110C. This reduces the need for individual game developers to have specialist expertise in the machine learning model concerned and also reduces the processing that needs to be carried out on each individual games console (thereby alleviating any reduction in games console performance).

In an example, whenever a prediction action is required, the game application makes an API call to the server 800 indicating the current input gaming data to be used for generating the prediction (e.g. input data vectors in the format exemplified in Fig. 7). The server 800, in response, then returns data indicating the predicted action (e.g. by returning one of the "Action" labels exemplified in Fig. 7).

It will be appreciated that the present technique may be applied to any game (e.g. virtual soccer games, racing games, combat games, first person shooters, etc.) for which, based on a learned relationship between past input data and instructed actions, the actions of a user can be predicted. The present technique is not limited to actions or commands input by the user using a controller 104. For example, it may be applied to gesture inputs and/or vocal inputs or the like.

Fig. 11 shows an example method. The method is executed by the CPU 20 and/or GPU 30, for example.

The method starts at step 901.

At step 902, video game data (e.g. data representing input variables of the machine learning model, as exemplified by the vectors of Fig. 7) is obtained from a video game application indicating an in-game situation (e.g. the situation of Fig. 4A).

At step 903, data indicating a predicted in-game action of a user is obtained in response to the in-game situation. The predicted in-game action (e.g. the label "Run to cover position", "Attack (shoot)" or "Attack (melee)") is output by the machine learning model based on the video game data, for example.

At step 904, output of a first sequence of video frames depicting the predicted in-game action (e.g. the sequence of video frames 501A to 501E) is begun.

At step 905, data indicating an instructed in-game action of the user is received (e.g. via a signal indicating the input command from the user, which is transmitted either directly from the controller 140 or transmitted between games consoles over a network).

At step 906, it is determined whether the predicted in-game action is the same as the instructed in-game action.

If the predicted in-game action is the same as the instructed in-game action, the method proceeds to step 907, at which output of the first sequence of video frames is continued. The method then ends at step 911.

On the other hand, if the predicted in-game action is not the same as the instructed in-game action, the method proceeds to step 908.

At step 908, output of the first sequence of video frames is stopped (so, for example, the currently-displayed frame of the first sequence, such as frame 501B in Fig. 6B, is the final frame of the first sequence which is displayed).

At step 909, one or more interpolated video frames (e.g. interpolated frames 601A and 601B in Fig. 6B) are output.

At step 910, output of a second sequence of video frames depicting the instructed in-game action is begun.

The first output video frame of the second sequence of video frames is the video frame output at two or more frame display times after a frame display time of the final output video frame of the first sequence of video frames. Furthermore, the one or more interpolated video frames are output at respective frame display times between the frame display time of the final output video frame of the first sequence of video frames and the frame display time of the first output video frame of the second sequence of video frames. Thus, for example, as exemplified in Fig. 6B, the frame display time of the final output video frame 501B of the first sequence is $t_2$ and the first output video frame 502E of the second sequence is output three frames later at time $t_5$. Furthermore, the interpolated frames 601A and 601B are output at times intervening frame display times $t_3$ and $t_4$, respectively.

The method ends at step 911.

Example(s) of the present technique are defined by the following numbered clauses:

　　1. A data processing apparatus comprising circuitry configured to:

　　　　obtain video game data from a video game application indicating an in-game situation;
　　　　obtain data indicating a predicted in-game action of a user in response to the in-game situation;
　　　　begin output of a first sequence of video frames depicting the predicted in-game action;
　　　　receive data indicating an instructed in-game action of the user;
　　　　if the predicted in-game action is the same as the instructed in-game action, continue output of the first sequence of video frames; and
　　　　if the predicted in-game action is not the same as the instructed in-game action:

　　　　　　stop output of the first sequence of video frames;
　　　　　　output one or more interpolated video frames; and
begin output of a second sequence of video frames depicting the instructed in-game action.

2. A data processing apparatus according to clause 1, wherein the one or more interpolated video frames are generated using a final output video frame of the first sequence of video frames and a first output video frame of the second sequence of video frames.

3. A data processing apparatus according to clause 2, wherein the final output video frame of the first sequence of video frames is the video frame being output when the data indicating the instructed in-game action is received.

4. A data processing apparatus according to clause 3, wherein:

the first output video frame of the second sequence of video frames is the video frame output at two or more frame display times after a frame display time of the final output video frame of the first sequence of video frames; and
the one or more interpolated video frames are output at respective frame display times between the frame display time of the final output video frame of the first sequence of video frames and the frame display time of the first output video frame of the second sequence of video frames.

5. A data processing apparatus according to any one of clauses 2 to 4, wherein the one or more interpolated frames are generated using motion interpolation between the final output video frame of the first sequence of video frames and a first output video frame of the second sequence of video frames.

6. A data processing apparatus according to any preceding clause, wherein the data indicating the predicted in-game action of the user is based on past video game data and past in-game actions of one or more second users.

7. A data processing apparatus according to clause 6, wherein the predicted in-game action of the user is determined by inputting the video game data to a machine learning model trained using the past video game data and past in-game actions of the one or more second users.

8. A data processing apparatus according to clause 7, wherein the machine learning model is executed by a second data processing apparatus and the circuitry is configured to transmit the video game data to the second data processing apparatus and, in response, receive the data indicating the predicted in-game action of the user from the second data processing apparatus.

9. A data processing apparatus according to clause 8 wherein, if the data indicating the instructed in-game action of the user is received before the data indicating the predicted in-game action of the user, the circuitry is configured to begin output of the second sequence of video frames without beginning output of the first sequence of video frames.

10. A data processing method comprising:

obtaining video game data from a video game application indicating an in-game situation;
obtaining data indicating a predicted in-game action of a user in response to the in-game situation;
beginning output of a first sequence of video frames depicting the predicted in-game action;
receiving data indicating an instructed in-game action of the user;
if the predicted in-game action is the same as the instructed in-game action, continuing output of the first sequence of video frames; and
if the predicted in-game action is not the same as the instructed in-game action:

stopping output of the first sequence of video frames;
outputting one or more interpolated video frames; and
beginning output of a second sequence of video frames depicting the instructed in-game action.

11. A program for controlling a computer to perform a method according to clause 10.

12. A computer-readable storage medium storing a program according to clause 11.

Numerous modifications and variations of the present disclosure are possible in light of the above teachings. It is therefore to be understood that, within the scope of the claims, the disclosure may be practiced otherwise than as specifically described herein.
In so far as embodiments of the disclosure have been described as being implemented, at least in part, by one or more software-controlled information processing apparatuses, it will be appreciated that a machine-readable medium (in particular, a non-transitory machine-readable medium) carrying such software, such as an optical disk, a magnetic disk, semiconductor memory or the like, is also considered to represent an embodiment of the present disclosure. In particular, the present disclosure should be understood to include a non-transitory storage medium comprising code components which cause a computer to perform any of the disclosed method(s).

It will be appreciated that the above description for clarity has described embodiments with reference to different functional units, circuitry and/or processors. However, it will be apparent that any suitable distribution of functionality between different functional units, circuitry and/or processors may be used without detracting from the embodiments.

Described embodiments may be implemented in any suitable form including hardware, software, firmware or any combination of these. Described embodiments may optionally be implemented at least partly as computer software running on one or more computer processors (e.g. data processors and/or digital signal processors). The elements and components of any embodiment may be physically, functionally and logically implemented in any suitable way. Indeed, the functionality may be implemented in a single unit, in a plurality of units or as part of other functional units. As such, the disclosed embodiments may be implemented in a single unit or may be physically and functionally distributed between different units, circuitry and/or processors.

Although the present disclosure has been described in connection with some embodiments, it is not intended to be limited to these embodiments. Additionally, although a feature may appear to be described in connection with particular embodiments, one skilled in the art would recognize that various features of the described embodiments may be combined in any manner suitable to implement the present disclosure.

**Claims**

1. A data processing apparatus comprising circuitry configured to:

   obtain video game data from a video game application indicating an in-game situation;
   obtain data indicating a predicted in-game action of a user in response to the in-game situation;
   begin output of a first sequence of video frames depicting the predicted in-game action;
   receive data indicating an instructed in-game action of the user;
   if the predicted in-game action is the same as the instructed in-game action, continue output of the first sequence of video frames; and
   if the predicted in-game action is not the same as the instructed in-game action:

      stop output of the first sequence of video frames;
      output one or more interpolated video frames; and

      begin output of a second sequence of video frames depicting the instructed in-game action.

2. A data processing apparatus according to claim 1, wherein the one or more interpolated video frames are generated using a final output video frame of the first sequence of video frames and a first output video frame of the second sequence of video frames.

3. A data processing apparatus according to claim 2, wherein the final output video frame of the first sequence of video frames is the video frame being output when the data indicating the instructed in-game action is received.

4. A data processing apparatus according to claim 3, wherein:

      the first output video frame of the second sequence of video frames is the video frame output at two or more frame display times after a frame display time of the final output video frame of the first sequence of video frames; and
      the one or more interpolated video frames are output at respective frame display times between the frame display time of the final output video frame of the first sequence of video frames and the frame display time of the first output video frame of the second sequence of video frames.

5. A data processing apparatus according to any one of claims 2 to 4, wherein the one or more interpolated frames are generated using motion interpolation between the final output video frame of the first sequence of video frames and a first output video frame of the second sequence of video frames.

6. A data processing apparatus according to any preceding claim, wherein the data indicating the predicted in-game action of the user is based on past video game data and past in-game actions of one or more second users.

7. A data processing apparatus according to claim 6, wherein the predicted in-game action of the user is determined by inputting the video game data to a machine learning model trained using the past video game data and past in-game actions of the one or more second users.

8. A data processing apparatus according to claim 7, wherein the machine learning model is executed by a second data processing apparatus and the circuitry is configured to transmit the video game data to the second data processing apparatus and, in response, receive the data indicating the predicted in-game action of the user from the second data processing apparatus.

9. A data processing apparatus according to claim 8 wherein, if the data indicating the instructed in-game action of the user is received before the data indicating the predicted in-game action of the user, the circuitry is configured to begin output of the second sequence of video frames without beginning output of the first sequence of video frames.

10. A data processing method comprising:

   obtaining video game data from a video game application indicating an in-game situation;
   obtaining data indicating a predicted in-game action of a user in response to the in-game situation;
   beginning output of a first sequence of video frames depicting the predicted in-game action;
   receiving data indicating an instructed in-game action of the user;
   if the predicted in-game action is the same as the instructed in-game action, continuing output of the first sequence of video frames; and
   if the predicted in-game action is not the same as the instructed in-game action:

      stopping output of the first sequence of video frames;
      outputting one or more interpolated video frames; and
      beginning output of a second sequence of video frames depicting the instructed in-game action.

11. A program for controlling a computer to perform a method according to claim 10.

12. A computer-readable storage medium storing a program according to claim 11.

Fig. 1

202

203

204

Communication interface

Input interface

Control circuitry

205

Fig. 2B

201

140

130

110

SoC

CPU 20

GPU 30

RAM 40

Data Port 60

A/V Port 90

Optical Drive 70

SSD 50

200

Fig. 2A

Fig. 3

Fig. 4A

Fig. 4B

Fig. 4C

Fig. 5A

501A   501B   501C   501D   501E

400

403D

402

time

$t_1$   $t_2$   $t_3$   $t_4$   $t_5$

Fig. 5B

501A   502B   502C   502D   502E

403D   402

400

time

$t_1$   $t_2$   $t_3$   $t_4$   $t_5$

Fig. 6A

Fig. 6B

| Player | Enemy 1 | Enemy 2 | Enemy 3 | Cover Position | Action |
|---|---|---|---|---|---|
| (8.0, "hand gun") | (-5.2, 9.5, "baseball bat") | (1.2, 12.4, "hand gun") | (8.5, 3.0, "hand gun") | (2.0, -0.5) | Run to cover position |
| (7.3, "machine gun") | (-4.9, 8.8, "baseball bat") | (1.5, 10.2, "hand gun") | (8.6, 3.8, "hand gun") | (1.8, -0.6) | Attack (shoot) |
| ... | ... | ... | ... | ... | ... |
| (10.0, "machete") | (-2.8, 3.1, "hand gun") | (1.5, 2.9, "machine gun") | (3.6, 3.0, "machete") | (2.0, -0.8) | Attack (melee) |

Fig. 7

Fig. 8

EP 4 559 549 A1

Fig. 9

Europäisches
Patentamt

European
Patent Office

Office européen
des brevets

## EUROPEAN SEARCH REPORT

**Application Number**

EP 23 38 6122

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/106819 A1 (MORRISON JONATHAN DAVID [US] ET AL) 2 April 2020 (2020-04-02) * abstract; figures 1-6 * * paragraphs [0001], [0002] * * paragraphs [0036], [0037] * * paragraph [0040] * | 1-12 | INV. A63F13/352 A63F13/358 A63F13/67 |
| A | EP 3 760 287 A1 (SONY INTERACTIVE ENTERTAINMENT INC [JP]) 6 January 2021 (2021-01-06) * abstract; figure 2 * * paragraphs [0003], [0004], [0010] * * paragraphs [0022], [0024] * | 1-12 | |
| A | US 2022/176244 A1 (MUSBAH MOHAMED [CA] ET AL) 9 June 2022 (2022-06-09) * abstract; figure 7 * * paragraphs [0003], [0054], [0055] * * paragraph [0069] * | 1-12 | |

**TECHNICAL FIELDS SEARCHED (IPC)**

A63F

The present search report has been drawn up for all claims

| Place of search | Date of completion of the search | Examiner |
|---|---|---|
| The Hague | 27 April 2024 | Tito Martins, José |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 38 6122

This annex lists the patent family members relating to the patent documents cited in the above-mentioned European search report.
The members are as contained in the European Patent Office EDP file on
The European Patent Office is in no way liable for these particulars which are merely given for the purpose of information.

27-04-2024

| Patent document cited in search report | | Publication date | Patent family member(s) | | Publication date |
|---|---|---|---|---|---|
| US 2020106819 | A1 | 02-04-2020 | CN | 112789093 A | 11-05-2021 |
| | | | EP | 3860732 A1 | 11-08-2021 |
| | | | JP | 7438201 B2 | 26-02-2024 |
| | | | JP | 2022502165 A | 11-01-2022 |
| | | | KR | 20210064239 A | 02-06-2021 |
| | | | US | 2020106819 A1 | 02-04-2020 |
| | | | WO | 2020072183 A1 | 09-04-2020 |
| EP 3760287 | A1 | 06-01-2021 | EP | 3760287 A1 | 06-01-2021 |
| | | | GB | 2585198 A | 06-01-2021 |
| | | | US | 2021001216 A1 | 07-01-2021 |
| US 2022176244 | A1 | 09-06-2022 | CN | 114585424 A | 03-06-2022 |
| | | | EP | 4048421 A1 | 31-08-2022 |
| | | | JP | 2022553617 A | 26-12-2022 |
| | | | KR | 20220081997 A | 16-06-2022 |
| | | | US | 2021113921 A1 | 22-04-2021 |
| | | | US | 2022168635 A1 | 02-06-2022 |
| | | | US | 2022176244 A1 | 09-06-2022 |
| | | | WO | 2021080793 A1 | 29-04-2021 |

EPO FORM P0459

For more details about this annex : see Official Journal of the European Patent Office, No. 12/82